Europäisches Patentamt

European Patent Office

Office européen des brevets

(19)

(11) Publication number: **0 041 342**
A2

(12) # EUROPEAN PATENT APPLICATION

(21) Application number: 81302255.5

(22) Date of filing: 21.05.81

(51) Int. Cl.³: **F 16 F 9/06**
**B 60 G 15/12**

(30) Priority: 03.06.80 GB 8018066
22.10.80 GB 8034082

(43) Date of publication of application:
09.12.81 Bulletin 81/49

(84) Designated Contracting States:
DE FR IT NL

(71) Applicant: LUCAS INDUSTRIES LIMITED
Great King Street
Birmingham, B19 2XF(GB)

(72) Inventor: Nicholls, Lawrence George
48 Arden Road
Acocks Green Birmingham B27 6AQ(GB)

(74) Representative: Spall, Christopher John et al,
BARKER, BRETTELL & DUNCAN 138 Hagley Road
Edgbaston Birmingham B16 9PW(GB)

(54) Improvements in suspension struts for vehicles.

(57) A suspension strut of the mono-tube type comprises a cylinder (1) of stepped outline having a portion (2) of greater diameter and a portion (3) of smaller diameter. A volume of gas or air adapted to support at least a part of the load on a wheel of a vehicle is accommodated in the portion (2) of greater diameter, and a piston (8) works in the cylinder (1) against hydraulic fluid in the cylinder (1). The gas or air is separated from the fluid by a floating piston (13), which can be omitted when the portion (2) is disposed at the upper end of the cylinder (1).

FIG.1.

1

## IMPROVEMENTS IN SUSPENSION STRUTS FOR VEHICLES

This invention relates to improvements in suspension struts of the mono-tube type for vehicles of the kind in which a volume of air or gas is adapted to support at least a part of the load on a wheel of the vehicle, and a piston working in a cylinder works against hydraulic fluid in the cylinder, the piston being provided with at least one valve or restrictor which permits a limited flow of hydraulic fluid past the piston in both directions.

In suspension struts of the kind set forth the volume of air or gas is accommodated in a pressure chamber which may be mounted on the upper end of the cylinder. This makes installation more difficult since the overall effective length of the strut is increased substantially. Alternatively the pressure chamber may be separate from the cylinder to which it is connected by an external connection. In such a construction the pressure chamber is installed in the vehicle in any convenient position remote from the cylinder which complicates assembly and increased costs.

According to our invention in a suspension strut of the kind set forth the effective volume of the cylinder itself is increased to increase the capacity of the strut within its existing axial length by increasing the overall diameter of the cylinder for a portion of predetermined length to accommodate a pressure chamber, in turn for accommodating the volume of gas or air.

Thus the pressure chamber is incorporated within the strut in a single assembly without increasing the effective length of the strut, which facilitates manufacture and installation.

The overall diameter of the cylinder itself may be increased for a particular length which terminates at one end of the cylinder to define the pressure chamber or to provide a portion in which the pressure chamber, comprising a separate assembly, is installed.

Alternatively the piston is carried by the free end of a rod which is rigid with the wall of a first cylindrical member in which the pressure chamber is provided without any increase in its effective length, the cylinder comprising a telescopic assembly constituted by the cylindrical member, and by a second cylindrical member in which the piston works.

The volume of gas or air in the pressure chamber may be separated from the hydraulic fluid by a pressure-responsive member, conveniently a piston, and when the gas or air is separated from the fluid by a pressure responsive member, one side of the pressure-responsive member is exposed to the gas or air, and the opposite side is unrestrictively exposed to the hydraulic fluid.

Our invention is particularly applicable to a suspension strut of the levelling type in which a control valve is operable to regulate the volume of hydraulic fluid within the cylinder and maintain the length of the strut at a predetermined value, irrespective of the load on the wheel. In such a construction the gas or air must be separated from the hydraulic fluid by a pressure-responsive member. In addition our invention is applicable to suspension struts of the non-levelling type which incorporate a fixed volume of hydraulic fluid and act as dampers between relatively movable parts.

Some embodiments of our invention are illustrated in the accompanying drawings in which:-

Figure 1 is a longitudinal section of a suspension strut of the levelling type;

Figure 2 is a view similar to Figure 1 of another levelling strut;

Figure 3 is a view similar to Figure 1 of yet another levelling strut;

Figure 4 is a longitudinal section of a suspension strut adapted to act as a damper; and

Figure 5 is a view similar to Figure 4 of another strut but showing a modification.

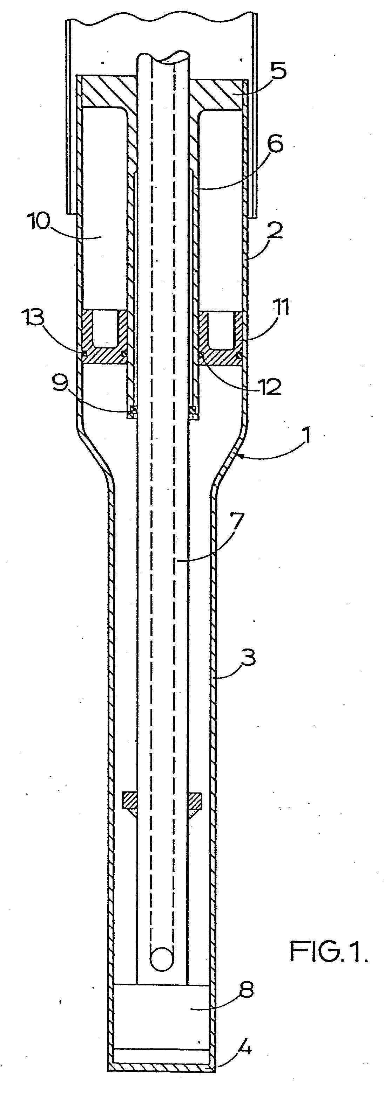

The suspension strut illustrated in Figure 1 of the drawings is of the mono-tube type. The strut comprises a cylinder 1 in the form of a unitary cylindrical member of stepped outline having an upper portion 2 of greater diameter and a lower portion 3 of smaller diameter. The lower free end of the portion 3 is closed by a closure 4 adapted to carry a wheel from a bracket (not shown), and the upper free end of the portion 2 is closed by a closure 5 provided with an inwardly extending cylindrical axial extension 6.

A piston-rod 7 works through the bore in the extension 6 and carries, at its lower free end, a piston 8 which, in turn, works in the bore of the portion 3 of smaller diameter. An annular seal 9 housed in a groove in the extension 6 adjacent to its inner end forms the sole seal between the closure 4 and the piston-rod 7 which slides through it. The piston 8 is of known construction and is provided with a valve or a restriction. The piston-rod 7 is secured at its upper end to a part of the chassis or frame of the vehicle and

4

the piston-rod 7 is hollow so that hydraulic fluid under pressure can be pumped into the cylinder 1 through a connection in the piston-rod which is controlled by a levelling valve by means of which the effective length of the strut is maintained at a predetermined value irrespective of the load on the wheel.

The load on the wheel is supported by a volume of gas or air in a pressure chamber 10 at the upper end of the strut. The pressure chamber 10 is defined within the upper portion 2 of the cylinder 1, between the closure 5 and a floating piston 11 of annular outline.

The floating piston 11 has radial grooves in its inner and outer peripheral edges in which are received annular seals 12 and 13 for sealing engagement respectively with the outer face of the extension 6 and the inner face of the portion 2.

The floating piston 11 acts as a separator between the gas or air under pressure and the hydraulic fluid with any possible permeability limited by the volume of the material of the seals 12 and 13.

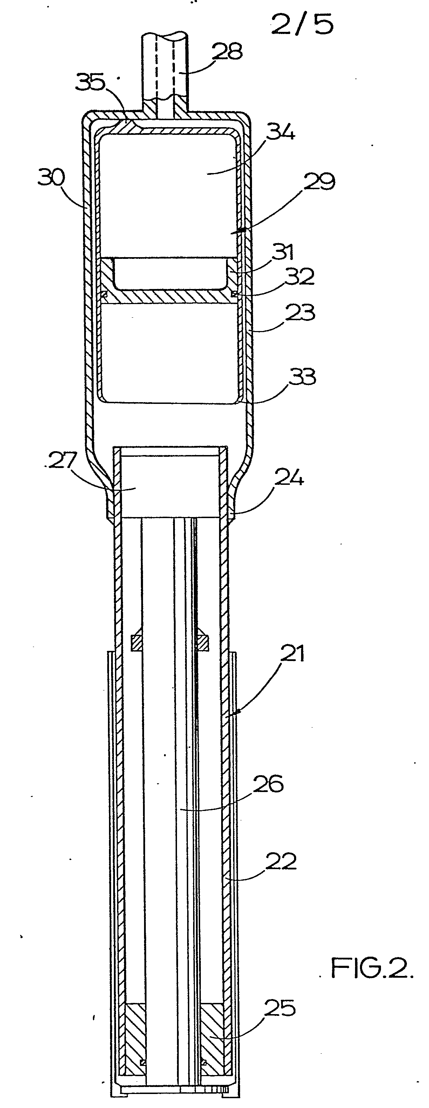

The suspension strut illustrated in Figure 2 comprises a cylinder 21 constructed from a cylindrical member 22, and sheet metal closure member 23 for the upper end of the cylinder 21 which is of hollow cup-shaped outline. The closure member 23 is of a diameter greater than that of the member 22 and its free lower end is deformed inwardly to form a skirt 24 which surrounds portion at the upper end of the member 22 and to which it is welded. The lower end of the member 22 is closed by a plug 25 through a central bore in which works a piston rod 26 carrying at its upper end a piston 27 which works in the bore of the member 22 and is similar in construction to the piston 8 of the previous embodiment. The free end of the piston-rod 26, which projects from the cylinder 21, and the upper end of the closure member 23 are connected between the axle of a wheel of a vehicle and a part of the frame or chassis of the vehicle.

Hydraulic fluid under pressure can be pumped into the cylinder 1 through a connection 28 at the upper end of the closure member 23, the flow through which is controlled by a levelling valve by means of which the effective length of the strut can be maintained at a predetermined value irrespective of the load on the wheel.

The load on the wheel is supported by a volume of gas or air in a pressure chamber 29 which is housed within the closure member 23, above the upper end of the member 22. The pressure chamber 29 comprises an elongate cup-shaped body 30 of cylindrical outline in which works a piston 31 carrying an annular seal 32 which has a sliding sealing engagement with the wall of the body 30. The free end of the body 30 is deformed inwardly into a flange which forms a stop 33 to prevent the piston 31 from clearing the body. The space 34 within the body 30 contains the volume of gas or air under pressure and the possible permeability is limited by the volume of the material of the seal 32.

The body 29 is spaced from the closed end of the closure 23 by a projection 35 on the body 29, and is of an external diameter chosen to provide sufficient clearance between it and the closure member 23 for the free passage of fluid past it.

As in the strut of Figure 1 the pressure chamber 29 is accommodated within the axial length of the strut, within a portion of the cylinder of which the internal surface is not swept by the piston 21.

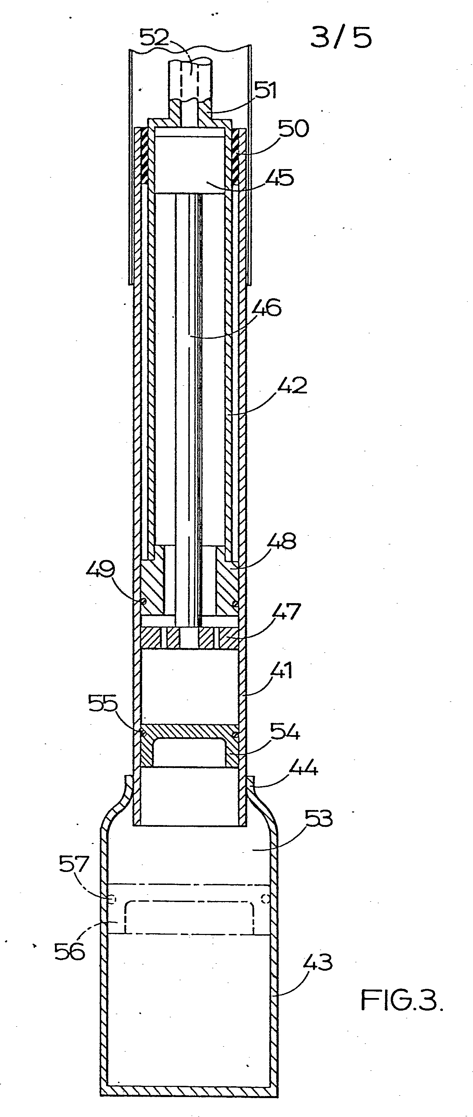

The strut illustrated in Figure 3 of the drawings comprises cylinder constituted by a telescopic assembly formed by a first outer cylindrical member 41, and a second inner cylindrical member 42 which is of a constant diameter throughout its axial length. The cylindrical member 41 is closed at its lower end by an end closure 43. The closure 43 is of a diameter greater than the member 41 and at its free upper end is deformed inwardly to form a skirt 44 which surrounds a portion at the lower end of the member 41, to which it is welded. A piston 45 is carried by the upper end of a rod 46 which extends upwardly from an apertured support plate 47 fixedly secured to the internal face of the member 41 in a position such that the piston 45 does not project from the open upper end of the member 41. The piston 45 is similar in construction to the pistons 8 and 27 described above.

The cylindrical member 42 has an internal bore in which the piston 45 is reciprocably received, and the lower end of the member 42 carries an outwardly directed radial flange 48 of increased diameter which works in the bore of the cylinder 41. A single annular seal 49 carried by the flange 48 has a sealing engagement with the wall of the bore of the cylinder 41.

A bushing 50 is housed in the cylindrical member 41 at its upper end to maintain the inner cylindrical member 42, which slides through the bushing 50, co-axial with the cylindrical member 41.

The upper end of the member 42 is closed by a closure 51 which is provided with a connection 52 through which hydraulic fluid can be pumped into the member 42 above the piston 45, the fluid then passing through the piston 45 and into the member 41 through the apertures in the plate 47.

The closure 51 and the closure 43 are adapted for connection between the frame or chassis of a vehicle and an axle, and a levelling valve controls the flow through the connection 50 to maintain the effective length of the strut at a predetermined value, irrespective of the load on a wheel carried by the axle.

The load on the wheel is supported by a volume of air or gas in a pressure chamber 53 in the lower end of the member 41. The pressure chamber 53 comprises a space in the member 41 between the end closure 43 and a floating piston 54 which works in the bore of the member 41. The floating piston 54 carries an annular seal 55 for sealing engagement with the bore of the cylindrical member 41.

Again the piston 54 acts as a separator between the gas or air under pressure and the hydraulic fluid and possible permeability is limited by the volume of the seal 55.

In a modification the floating piston 54 can be replaced by a piston 56 shown in chain-dotted outline and which is of greater diameter. The piston 56 works in the bore of the end closure 43, and carries an annular seal 57 for sealing engagement with the bore of the end closure 43.

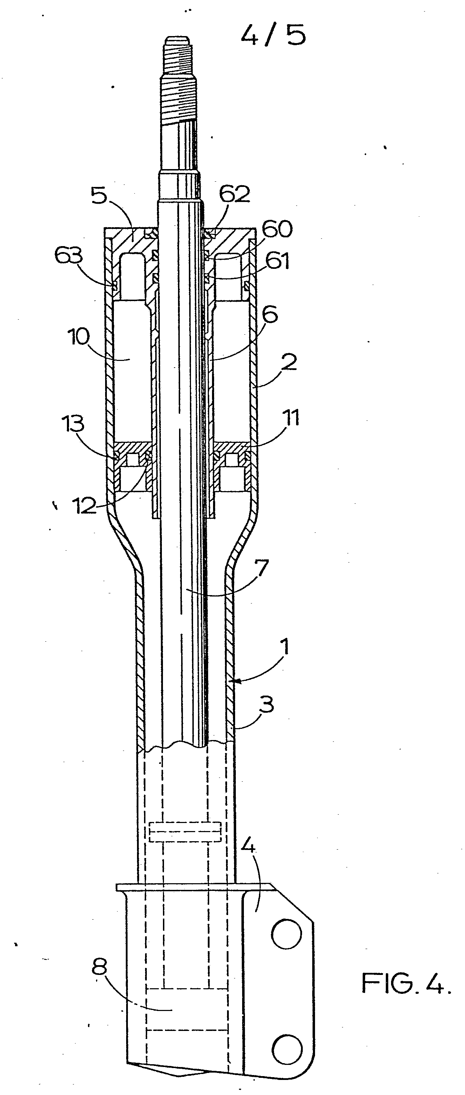

The suspension strut illustrated in Figure 4 of the drawings is provided with a fixed volume of hydraulic fluid and the piston-rod 7 is solid. The strut acts as a damper to damp out movement between relatively movable parts.

The seal 9 is omitted and two axially spaces seals 60, 61 are housed in the closure 5 adjacent to the upper end of the extension 6, with a third wiper seal 62 being housed in a recess at the upper end of the closure 5. The seals 60, 61, 62 provide seals with the rod 4.

A further seal 63 for engagement with the internal wall of the cylinder 1 is carried by a skirt 64 which depends from the closure 5.

The construction and operation of the strut of Figure 4 is otherwise the same as that illustrated in Figure 1 and corresponding reference numerals have been applied to corresponding parts.

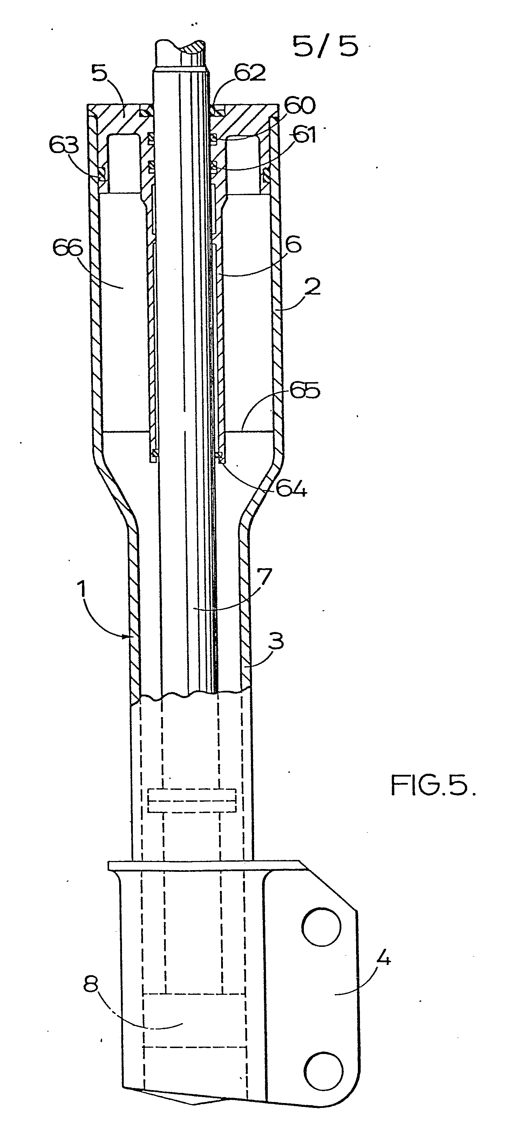

The strut of Figure 5 is again not of the levelling type and is similar to the strut of Figure 4. The piston 11 is omitted from this construction and a seal 64 is provided at the lower end of the extension 6 for sealing engagement with the piston-rod 7. The cylinder 1 is filled with hydraulic fluid to a minimum level above the seal 64, indicated by the line 65, with the space 66 above the level being filled with a volume of gas or air under pressure.

In the strut of Figure 5 emulsification of fluid can take place.

9

The construction of the strut of Figure 5 is otherwise the same as that of Figure 4 and corresponding reference numerals have been applied to corresponding parts.

CLAIMS

1. A suspension strut of the mono-tube type for vehicles in which a volume of air or gas is adapted to support at least part of the load on a wheel of the vehicle, and a piston (8, 27, 45) working in a cylinder (1, 21, 41, 42) works against hydraulic fluid in the cylinder, the piston being provided with at least one valve or restrictor which permits a limited flow of hydraulic fluid past the piston in both directions, characterised in that the effective volume of the cylinder itself is increased to increase the capacity of the strut within its existing axial length by increasing the overall diameter of the cylinder for a portion (2, 23, 43) of predetermined length to accommodate a pressure chamber (10, 29, 53), in turn for accommodating the volume of gas or air.

2. A suspension strut as claimed in Claim 1, characterised in that the portion (2, 23, 43) of increased diameter terminates at one end of the cylinder.

3. A suspension strut as claimed in Claims 1 or 2, characterised in that the portion (2,43) of increased diameter defines the pressure chamber (10, 53).

4. A suspension strut as claimed in Claim 1 or Claim 2, characterised in that the pressure chamber (29) comprises a separate assembly which is installed within the portion (23) of increased diameter.

5. A suspension strut as claimed in Claim 2 or Claim 3, characterised in that the portion (2) of increased diameter is disposed at the upper end of the cylinder (1), and the gas or air is in direct contact with the hydraulic fluid.

6.    A suspension strut as claimed in Claim 2 or Claim 3, characterised in that the volume of gas or air is separated from the hydraulic fluid by a pressure-responsive member (11, 31, 54, 56) of which one side is unrestrictively exposed to the hydraulic fluid.

7.    A suspension strut as claimed in Claim 6, characterised in that the pressure-responsive member (11, 31, 54, 56) comprises a floating piston.

8.    A suspension strut as claimed in Claim 7, characterised in that the piston (11, 56) works in the portion (2,43) of increased diameter.

9.    A suspension strut as claimed in Claim 7 or Claim 8, characterised in that the piston (11) is of annular outline provided in its outer peripheral with an annular seal (13) for sealing enagagement with the inner face of the portion (2) of increased diameter, and in its inner edge with an annular seal (12) for sealing engagement with the outer face of an axial extension (6) which extends into the cylinder (1) from a closure (5) for the adjacent end thereof, a rod (7) carrying the piston (8) extending into the cylinder (1) through seal (9) in the closure (5).

10.   A suspension strut as claimed in any of Claims 1 to 8, characterised in that the cylinder comprises a telescopic assembly (41, 42) constituted by a first outer cylindrical member (41) and a second inner cylindrical member (42), and the piston (45) is carried by the free end of a rod (46) which is rigid with the wall of the first cylindrical member (41) which incorporates the portion (43) of increased diameter, the piston (45) working in the bore of the inner cylindrical member (42).

FIG.1.

0041342

2/5

FIG.2.

FIG.3.

FIG.4.

FIG.5.